# EUROPÄISCHE PATENTANMELDUNG

(11) **EP 2 017 435 A2**
(43) Veröffentlichungstag der Anmeldung: **21.01.2009**
(21) Anmeldenummer: 08010309.6
(22) Anmeldetag: 06.06.2008
(51) Int. Cl.: F01D 25/16, F02C 7/06, F01D 15/10

(54) **Turbomaschine mit elektrischer Maschine und Magnetlagern**

(30) Priorität: 14.07.2007 DE 102007032933
(71) Anmelder: ATLAS COPCO ENERGAS GMBH, 50999 Köln (DE)
(72) Erfinder: Bosen, Werner, 51143 Köln (DE)
(74) Vertreter: Albrecht, Rainer Harald

(57) **Zusammenfassung**

Die Erfindung betrifft eine Turbomaschine (1) mit einem Gehäuse (2), einer elektrischen Maschine (3) und einer in dem Gehäuse gelagerten Rotorwelle (4), wobei der Läufer der elektrischen Maschine (3) auf der Rotorwelle (4) angeordnet ist und wobei an mindestens einem Ende der Rotorwelle (4) ein Radial-Laufrad (5) fliegend angeordnet ist. Erfindungsgemäß ist an dem Ende der Rotorwelle (4) eine Magnetlagerhälfte (6) zur axialen Lagerung der Rotorwelle (4) an der laufradseitigen Wand des Gehäuses (2) angeordnet und wirkt auf die Rückenfläche (7) des Radial-Laufrades (5).

## Beschreibung

Die Erfindung betrifft eine Turbomaschine mit einem Gehäuse, einer elektrischen Maschine und einer in dem Gehäuse gelagerten Rotorwelle, wobei der Läufer der elektrischen Maschine auf der Rotorwelle angeordnet ist und wobei an mindestens einem Ende der Rotorwelle ein Radial-Laufrad fliegend angeordnet ist.

Aus der Praxis sind Turbomaschinen mit einer axial magnetisch gelagerten Rotorwelle bekannt, bei denen die Magnetlagerhälften zur axialen Lagerung einer Axiallagerscheibe oder entgegengesetzten Wellenschultern zugeordnet sind, die auf der Rotorwelle aufgeschrumpft sind. Es sind auch Kombinations-Magnetlagerausführungen bekannt, bei denen an einem Ende der Rotorwelle an den beiden Seitenflächen eines auf der Rotorwelle angeordneten, rotierenden Lamellenpakets die beiden axialen Magnetlagerhälften angeordnet sind und die Mantelfläche des Lamellenpakets von einem radialen Magnetlager umfasst ist, während das gegenüberliegende Ende der Rotorwelle ebenfalls an einem radialen Magnetlager gelagert sein kann.

Ferner sind aus der Praxis Turbomaschinen mit den eingangs beschriebenen Merkmalen bekannt, deren Rotorwelle an einem aktiven Magnetlager gelagert ist, das am Ende der Rotorwelle vor dem Radial-Laufrad angeordnet ist. Aktive Magnetlager benötigen eine ständige Stromversorgung und zur Absicherung der Lagerung im Falle eines Stromausfalls so genannte Fanglager. Solche Fanglager sind üblicherweise mechanische, radiale und axiale Notkugellager, welche die Rotorwelle im Stillstand oder im Fall eines Ausfalls der Magnetlager stützen.

Da bei den bekannten, aktiven Magnetlagern das benötigte Magnetfeld mit Hilfe von Elektromagneten erzeugt wird, kann das Magnetfeld und damit die wirkende Lagerkraft durch Variationen des Stromes in den Spulen der Elektromagnete verändert werden. Um eine Rotorwelle an einem aktiven Magnetlager lagern zu können, ist daher eine Regelung erforderlich, mit deren Hilfe die entsprechende Lagerkraft einstellbar ist. Durch eine Magnetlagerung der Rotorwelle lassen sich solche Turbomaschinen mit sehr hohen Drehzahlen betreiben. Allerdings liegen die biegekritischen Eigenfrequenzen der Rotorwelle bei hohen Betriebsdrehzahlen in der Nähe oder unterhalb der höchsten Dauerbetriebsfrequenz der Turbomaschine. Dadurch wird eine stabile, aktive Regelung der Magnetlager sehr aufwendig oder unmöglich.

Ein Betrieb der Turbomaschine in einem Zustand, in dem Frequenzen auftreten können, die im Bereich von biegekritischen Eigenfrequenzen der Rotorwelle liegen, wird im Wesentlichen durch zwei vorkehrende Maßnahmen ausgeschlossen. Zum einen werden die zulässigen Betriebsdrehzahlen bereits bei der Auslegung der Turbomaschine herabgesetzt. Bei einer gegebenen Leistung und Anforderung an die Turbomaschine führt diese Maßnahme zum Bau von größeren Turbomaschinen, deren unterhalb der optimalen Drehzahl ausgelegten Verdichter- oder Expanderstufen zudem einen gegenüber der optimalen Auslegung reduzierten Wirkungsgrad aufweisen. Zum anderen kann auf eine zusätzliche Axiallagerscheibe verzichtet werden. Damit kann die Masse der Rotorwelle reduziert werden, da die Rotorwelle um den Wellenabschnitt für die zusätzliche Axiallagerscheibe verkürzt werden kann, so dass die biegekritischen Eigenfrequenzen der Rotorwelle erhöht werden. Da die axialen Magnetlagerhälften bei einem Wegfall der Axiallagerscheibe nur an wesentlich kleineren Wellenschultern oder an auf die Rotorwelle aufgeschrumpften, rotierenden Lamellenpaketen angreifen, kommt es allerdings zu einer unerwünschten Verminderung der Axiallagerkräfte.

Vor diesem technologischen Hintergrund liegt der Erfindung die Aufgabe zugrunde, eine Turbomaschine mit den eingangs beschriebenen Merkmalen anzugeben, die eine kurze Rotorwelle sowie eine kleine Rotormasse aufweist, um die biegekritischen Eigenfrequenzen des Rotors und damit die Betriebsdrehzahl der Turbomaschine erhöhen zu können, und die des Weiteren ausreichend dimensionale axiale Magnetlager zur Aufnahme der oft hohen statischen und dynamischen Druck- und Impulsachsschüben des Radial-Laufrads aufweist.

Gegenstand der Erfindung und Lösung dieser Aufgabe ist eine Turbomaschine nach Anspruch 1. Zum grundsätzlichen Aufbau der erfindungsgemäßen Turbomaschine gehören ein Gehäuse, eine elektrische Maschine und eine in dem Gehäuse gelagerte Rotorwelle. Der Läufer der elektrischen Maschine ist auf der Rotorwelle angeordnet. An wenigstens einem Ende der Rotorwelle ist zudem ein Radial-Laufrad fliegend angeordnet. Zur axialen Lagerung der Rotorwelle ist an der laufradseitigen Wand des Gehäuses an wenigstens einem Ende der Rotorwelle eine axiale Magnetlagerhälfte angeordnet, die auf die Rückenfläche des Radial-Laufrades wirkt.

Magnetlager kommen ohne Ölschmiersystem aus und erweisen sich allgemein als verschleißfrei. Magnetlager erlauben ferner höchste Drehzahlen mit sehr geringen Verlusten und einer hohen Laufruhe, wodurch insgesamt ein wirtschaftlich günstiger und hermetisch dichter Betrieb möglich ist. Aus diesem Grund ist die Rotorwelle der erfindungsgemäßen Turbomaschine vorzugsweise auch radial an Magnetlagern gelagert.

Im Rahmen einer bevorzugten Ausgestaltung der Erfindung sind an beiden Enden der Rotorwelle Radial-Laufräder.fliegend angeordnet. Ferner befinden sich ebenfalls an beiden Enden der Rotorwelle zu ihrer axialen Lagerung Magnetlagerhälften, die auf beiden laufradseitigen Wänden des Gehäuses angeordnet sind. Die Magnetlagerhälften wirken jeweils auf ringförmige Rückenflächen der ihnen zugeordneten Radial-Laufräder. Die Rückenflächen der Radial-Laufräder werden somit als Ringscheibenflächen ausreichender Größe für je eine der beiden axialen Magnetlagerhälften genutzt und dienen den axialen Magnetlagerhälften als Lagerscheiben. Durch diese bevorzugte Ausgestaltung der Erfindung ist den hohen statischen und dynamischen Druck-und Impulsachsschüben, denen die Radial-Laufräder ausgesetzt sind, eine ausreichende statische und dynamische Axiallagerkraft entgegengesetzt.

Die radialen und axialen Magnetlager der Rotorwelle sind vorzugsweise aktive Magnetlager, die über eine Regelung verfügen, mit der die jeweils aktuell wirkenden Lagerkräfte veränderbar sind. Da die Position der Rotorwelle durch, berührungslose Messfühler messbar ist, ist damit während des Betriebes der Turbomaschine eine exakte Steuerung der Rotorwellenlagerung möglich. Zur Absicherung der aktiven Magnetlager sind in dieser konstruktiven Ausgestaltung der Turbomaschine radiale Fanglager vorgesehen, die an der Rotorwelle im Rotorwellenbereich zwischen den Lagerzapfen für die radialen Magnetlager und den Radial-Laufrädern angeordnet sind. Diese radialen Fanglager sind üblicherweise als Gleitlager oder bevorzugt als Wälzlager, beispielsweise Kugellager, ausgeführt. Zwischen den Fanglagern und den Radial-Laufrädern befinden sich ferner rotierende Bestandteile der Wellenabdichtungen zur Abdichtung der Rotorwelle.

In diesem Bereich der Wellenüberhänge für die Fanglager und rotierenden Bestandteile der Wellenabdichtungen sind im Rahmen einer besonders bevorzugten Ausgestaltung der Erfindung die Magnetlagerhälften zur axialen Lagerung der Rotorwelle angeordnet. Durch diese konstruktive Lösung ist der axiale Platzbedarf gegenüber bekannten Turbomaschinen reduziert und wird eine zusätzliche Verlängerung des Wellenüberhangs vermieden. Der Wellenüberhang zwischen dem radialen Magnetlager und dem Radial-Laufrad dieser Ausführung der Erfindung ist so bemessen, dass in axialer Richtung der Rotorwelle genau die Wellenabdichtung und das Fanglager an ihm Platz haben.

Bei einer weiteren bevorzugten Ausgestaltung der Erfindung ist die Turbomaschine ein zweistufiger Verdichter radialer Bauart. Die elektrische Maschine dieser Ausführung ist ein Elektro-Motor. Des Weiteren kann die Turbomaschine auch als zweistufige Expansionsturbine zentripetaler Bauart mit entsprechend als Generator arbeitender elektrischer Maschine ausgeführt sein. Ferner umfasst die Erfindung auch eine Turbomaschine mit einer Verdichterstufe und einer Expansionsstufe. Die elektrische Maschine kann bei dieser Ausführung einerseits als Elektro-Motor betrieben werden, wenn die erforderliche Antriebsleistung für die Verdichterstufe größer ist als die Wellenleistung, die von der Expansionsstufe abgegeben wird. Andererseits kann die elektrische Maschine auch als Generator betrieben werden, wenn die abgegebene Wellenleistung der Expansionsstufe größer ist als die für die Verdichterstufe benötigte Antriebsleistung. In Abhängigkeit von den jeweiligen Betriebsbedingungen der Verdichterstufe und der Expansionsstufe kann die elektrische Maschine sowohl als Elektro-Motor als auch als Generator betrieben werden.

Im Folgenden wird die Erfindung anhand einer lediglich ein Ausführungsbeispiel darstellenden Zeichnung erläutert. Die einzige Figur zeigt schematisch eine Schnittdarstellung der erfindungsgemäßen Turbomaschine.

Die in der Figur dargestellte Turbomaschine 1 besteht in ihrem grundsätzlichen Aufbau aus einem Gehäuse 2, einer elektrischen Maschine 3 und einer in dem Gehäuse 2 gelagerten Rotorwelle 4, wobei der Läufer der elektrischen Maschine 3 auf der Rotorwelle 4 angeordnet ist und wobei an mindestens einem Ende der Rotorwelle 4 ein Radial-Laufrad 5 fliegend angeordnet ist. Ferner ist an wenigstens einem Ende der Rotorwelle 4 eine Magnetiagerhälfte 6 zur axialen Lagerung der Rotorwelle 4 an der laufradseitigen Wand des Gehäuses 2 angeordnet. Diese Magnetlagerhälfte 6 wirkt auf die Rückenfläche 7 des Radial-Laufrades 5.

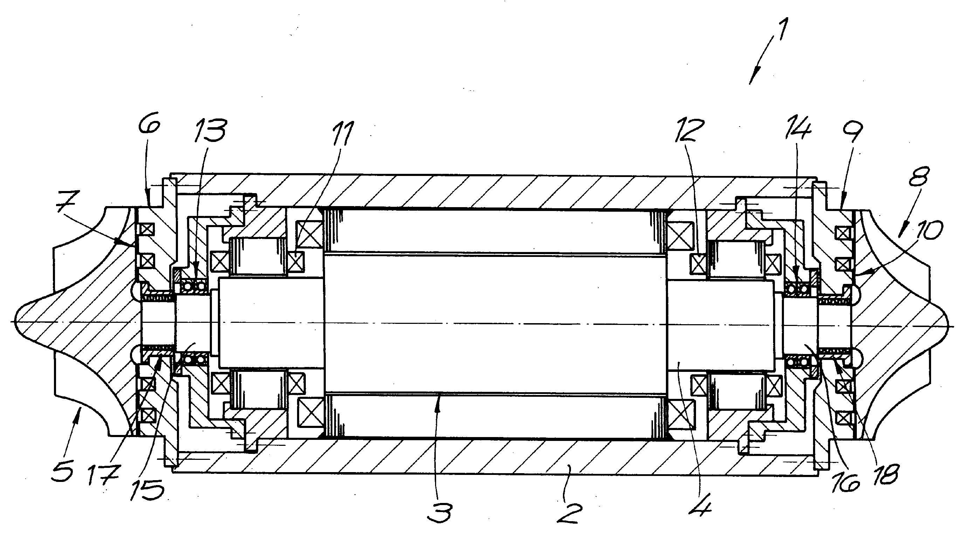

Die in der Figur dargestellte, bevorzugte Ausführung der erfindungsgemäßen Turbomaschine 1 umfasst auch am zweiten Ende ihrer Rotorwelle 4 ein fliegend angeordnetes Radial-Laufrad 8. Das zweite Ende der Rotorwelle 4 ist ebenfalls axial an einer Magnetlagerhälfte 9 gelagert, die auf die Rückenfläche 10 des zugeordneten Radial-Laufrades 8 wirkt. Des Weiteren ist die Rotorwelle 4 der dargestellten Turbomaschine 1 radial ebenfalls an Magnetlagern 11, 12 gelagert. Die radialen Magnetlager 11, 12 und die axialen Magnetlagerhälften 6, 9 dieser Ausführungsform der Turbomaschine 1 sind aktive Magnetlager und verfügen über eine in Fig. 1 nicht dargestellte Regelung, mit welcher die an den Magnetlagern aktuell wirkenden Lagerkräfte steuerbar sind. Eebenfalls nicht dargestellte Messfühler nehmen kontinuierlich die Position der Rotorwelle 4 auf, so dass die Rotorwellenlagerung exakt einstellbar ist. Zur Absicherung der aktiven Magnetlager sind Fanglager 13, 14 zwischen den Radial-Laufrädern 5, 8 und den radialen Magnetlagern 11, 12 angeordnet. Diese Fanglager 13, 14 sind zweckmäßig als Wälzlager ausgeführt. Die Wälzlager können dabei als Kugellager ausgestaltet sein, deren Kugeln aus einem metallischen oder keramischen Werkstoff hergestellt sind. Die axialen Magnetlagerhälften 6, 9 sind an den laufradseitigen Wänden des Gehäuses 2 angeordnet. Die Anordnung befindet sich im Bereich von Wellenüberhängen 15, 16 für die Fanglager 13, 14 und der Wellenabdichtungen 17, 18. Der Wellenüberhang 15 bzw. 16 zwischen dem radialen Magnetlager und dem Radial-Laufrad ist jeweils so bemessen, dass genau die Wellenabdichtung und das Fanglager Platz haben.

In der dargestellten bevorzugten Ausgestaltung der Erfindung kann die Turbomaschine 1 ein zweistufiger Verdichter radialer Bauart sein. Die elektrische Maschine 3 der dargestellten Ausführung kann ein Elektro-Motor sein. Ebenfalls kann die dargestellte Turbomaschine 1 als zweistufige Expansionsturbine zentripetaler Bauart ausgeführt sein, wobei die elektrische Maschine 3 dann entsprechend als Generator betrieben sein kann. Ferner kann die dargestellte Ausführungsform der erfindungsgemäßen Turbomaschine 1 eine Expansionsturbinenstufe sowie eine Verdichterturbinenstufe umfassen. Die elektrische Maschine 3 kann bei dieser Ausführung einerseits als Elektro-Motor betrieben werden, wenn die erforderliche Antriebsleistung der Verdichterstufe größer ist als die Wellenleistung, die von der Expansionsstufe abgegeben wird. Andererseits kann die elektrische Maschine 3 auch als Generator betrieben werden, wenn die von der Expansionsstufe abgegebene Wellenleistung größer ist als die für die Verdichterstufe erforderliche Antriebsleistung. In Abhängigkeit von den jeweiligen Betriebsbedingungen der Verdichterstufe und der Expansionsstufe der in der einzigen Figur dargestellten bevorzugten Ausgestaltung der Erfindung kann die elektrische Maschine 3 sowohl als Elektro-Motor als auch als Generator betrieben werden.

## Patentansprüche

1. Turbomaschine (1) mit einem Gehäuse (2), einer elektrischen Maschine (3) und einer in dem Gehäuse (2) gelagerten Rotorwelle (4), wobei der Läufer der elektrischen Maschine (3) auf der Rotorwelle (4) angeordnet ist und wobei an mindestens einem Ende der Rotorwelle (4) ein Radial-Laufrad (5) fliegend angeordnet ist, **dadurch gekennzeichnet, dass** an dem Ende der Rotorwelle (4) eine Magnetlagerhälfte (6) zur axialen Lagerung der Rotorwelle (4) an der laufradseitigen Wand des Gehäuses (2) angeordnet ist und auf die Rückenfläche (7) des Radial-Laufrades (5) wirkt.

2. Turbomaschine (1) nach Anspruch 1, **dadurch gekennzeichnet, dass** die Rotorwelle (4) radial mit Magnetlagern (11, 12) gelagert ist.

3. Turbomaschine (1) nach einem der Ansprüche 1 oder 2, **dadurch gekennzeichnet, dass** an beiden Enden der Rotorwelle (4) Radial-Laufräder (5, 8) fliegend angeordnet sind und dass zur axialen Lagerung der Rotorwelle (4) an beiden Enden der Rotorwelle (4) auf beiden laufradseitigen Wänden des Gehäuses (2) Magnetlagerhälften (6, 9) angeordnet sind, welche auf die Rückenflächen (7, 10) der zugeordneten Radial-Laufräder (5, 8) wirken.

4. Turbomaschine (1) nach Anspruch 3, **dadurch gekennzeichnet, dass** die radialen Magnetlagerhälften (6, 9) und axialen Magnetlager (11, 12) der Rotorwelle (4) aktive Magnetlager sind und dass die Turbomaschine (1) Fanglager (13, 14) zur Absicherung der Magnetlager (6, 9, 11, 12) und Wellenabdichtungen (17, 18) aufweist, wobei die Fanglager (13, 14) und Wellenabdichtungen (17, 18) an den Enden der Rotorwelle (4) jeweils in einem Wellenabschnitt zwischen dem radialen Magnetlager (11, 12) und dem Radial-Laufrad (5, 8) angeordnet sind.

5. Turbomaschine (1) nach einem der Ansprüche 1 bis 4, **dadurch gekennzeichnet, dass** die Turbomaschine (1) entweder ein zweistufiger Verdichter oder ein zweistufiger Expander ist und dass die elektrische Maschine (3) entweder ein Elektro-Motor oder ein Generator ist.

6. Turbomaschine (1) nach einem der Ansprüche 1 bis 4, **dadurch gekennzeichnet, dass** die Turbomaschine (1) eine Verdichterstufe und eine Expanderstufe aufweist und dass die elektrische Maschine (3) in Abhängigkeit von den Betriebsbedingungen der Verdichterstufe und der Expanderstufe als Elektro-Motor oder als Generator betreibbar ist.
